# EUROPEAN PATENT SPECIFICATION

(11) **EP 3 144 548 B1**
(45) Date of publication and mention of the grant of the patent: **15.04.2020**
(21) Application number: 15793103.1
(22) Date of filing: 15.05.2015
(51) Int. Cl.: F16C 11/06

(54) **BALL JOINT**
KUGELGELENK
JOINT À ROTULE

(30) Priority: 15.05.2014 JP 2014101055
(43) Date of publication of application: 22.03.2017
(73) Proprietor: THK Co., Ltd., Tokyo 141-8503 (JP)
(72) Inventor: KONNO Hisashi, Shinagawa-ku Tokyo 141-8503 (JP); TOKAIRIN Tsutomu, Shinagawa-ku Tokyo 141-8503 (JP); INOKO Hiroshi, Shinagawa-ku Tokyo 141-8503 (JP)
(74) Representative: Grünecker Patent- und Rechtsanwälte PartG mbB
(86) International application number: PCT/JP2015/063984
(87) International publication number: WO 2015/174513

(56) References cited:
- BR-A2- PI0 717 994
- DE-A1- 4 445 251
- DE-A1- 19 800 614
- JP-A- 2013 177 980
- JP-U- H0 667 919
- US-A- 3 197 245
- US-A- 3 202 444
- US-A- 5 921 698
- US-A- 5 921 698
- US-A1- 2008 235 984

## Description

### TECHNICAL FIELD

The present invention relates to a ball joint to be used, for example, in a link mechanism for a stabilizer connecting rod, a height control sensor, or a mission control unit of an automobile.

### BACKGROUND ART

As the ball joint of this type, there has been known a ball joint that includes a ball stud and a holder. The ball stud includes a shaft member and a ball portion formed at a distal end of the shaft member to serve as a rocking center of a link mechanism. The holder is configured to cover a maximum diameter portion of the ball portion of the ball stud to accommodate the ball portion in a pivotable manner, and has an opening portion through which the shaft member protrudes.

In a ball joint disclosed in JP 02-31019 A (Patent Literature 1), the holder is made of a synthetic resin. Specifically, the ball portion of the ball stud is covered with an elastic sliding contact member made of a urethane rubber or the like, thereafter the ball stud is set as a core in a die, and then the holder is formed around the elastic sliding contact member by injection molding of a thermoplastic resin. Thus, through formation of the holder by injection molding with the ball portion covered with the elastic sliding contact member as the core, the holder is formed around the elastic sliding contact member integrally with the elastic sliding contact member without a gap, and the elastic sliding contact member also closely adheres to the ball portion without a gap by injection pressure of the thermoplastic resin. In this manner, three components, that is, the ball portion, the elastic sliding contact member, and the holder are integrated with one another without a gap, and the ball portion is accommodated and held in the holder simultaneously with injection molding.

DE 44 45 251 A1 discloses a guiding suspension joint for a wheel. In said document, all elements of the joint are made of metal.

A corresponding disclosure, as described in DE 44 45 251 A1, is also disclosed in BR PI0 717 994 A2.

Further, from US 2008/235984 A1, two housing parts are known, which encapsulate a ball portion of the ball stud and which are made of plastic material. These housing parts are provided with ribs and recesses, in order to prevent the leakage of grease. From US 3 202 444 A, a ball joint is known, wherein two flanges of a housing, which house a ball portion of a ball stud may be welded together.

### CITATION LIST

### PATENT LITERATURE

[PTL 1] JP 02-31019 A

### DISCLOSURE OF THE INVENTION

### PROBLEMS TO BE SOLVED BY THE INVENTION

However, in the ball joint disclosed in Patent Literature 1, adhesion among the ball portion, the elastic sliding contact member, and the holder is high. Accordingly, there is a problem in that, when the thermoplastic resin forming the holder contracts or expands depending on a temperature in a usage environment, a force of fastening the ball portion by the holder fluctuates, resulting in fluctuation of a torque value required to rock the ball stud.

### MEANS FOR SOLVING THE PROBLEMS

The present invention has been made to solve the above-mentioned problem, and has an object to provide a ball joint that is less affected by fluctuations in environmental temperature, and is capable of stabilizing a torque value required to rock a ball stud in a holder.

That is, according to one embodiment of the present invention, there is provided a ball joint, including: a ball stud including: a shaft member; and a ball portion formed at one end of the shaft member; and a holder made of a synthetic resin and configured to accommodate the ball portion in a pivotable manner, in which the holder includes: an opening portion from which the shaft member protrudes; a first member including a first ball sliding contact surface having a concave spherical shape approximate to a spherical surface of the ball portion; and a second member including: a second ball sliding contact surface having a concave spherical shape approximate to the spherical surface of the ball portion; and the opening portion formed in a center of the second ball sliding contact surface. Further, the first member and the second member respectively include joining surfaces fixed to each other by welding, and respectively include fixation reference surfaces that are brought into abutment against each other so that a spacing between the first ball sliding contact surface and the second ball sliding contact surface is maintained constant. The fixation reference surfaces are each formed into an annular shape so as to surround the ball portion of the ball stud. The joining surfaces are formed into an annular shape on an outer side of the fixation reference surfaces, respectively. A step is defined between the fixation reference surfaces and the joining surfaces.

### EFFECTS OF THE INVENTION

A ball joint is provided, having the features defined in claim 1. Further preferred embodiments are defined in the dependent claims.

Further, the joining surface of the first member and the joining surface of the second member, which are to be welded to each other, are formed into an annular shape so as to surround the fixation reference surfaces, and the step is formed between the fixation reference surfaces and the joining surfaces. Accordingly, during welding, a molten resin does not protrude onto the fixation reference surfaces, the first ball sliding contact surface, and the second ball sliding contact surface. Thus, the first member and the second member can be joined together properly, and smooth rocking of the ball stud can be ensured.

### BRIEF DESCRIPTION OF THE DRAWINGS

FIG. 1 is a front sectional view for illustrating a ball joint according to a first embodiment, to which the present invention is applied.
FIG. 2 is an enlarged sectional view for illustrating relevant parts of a first member of the ball joint illustrated in FIG. 1.
FIG. 3 is an enlarged sectional view for illustrating a second member of the ball joint illustrated in FIG. 1.
FIG. 4 is a schematic view for illustrating a step of manufacturing a ball stud of the ball joint illustrated in FIG. 1.
FIG. 5 is a schematic view for illustrating a step of manufacturing a holder of the ball joint illustrated in FIG. 1.
FIG. 6 is a front sectional view for illustrating a ball joint according to a second embodiment, to which the present invention is applied.
FIG. 7 is an exploded view for illustrating combination of a first member and a second member of the ball joint illustrated in FIG. 6.

### MODE FOR CARRYING OUT THE INVENTION

Now, detailed description is made of a ball joint according to the present invention with reference to the accompanying drawings.

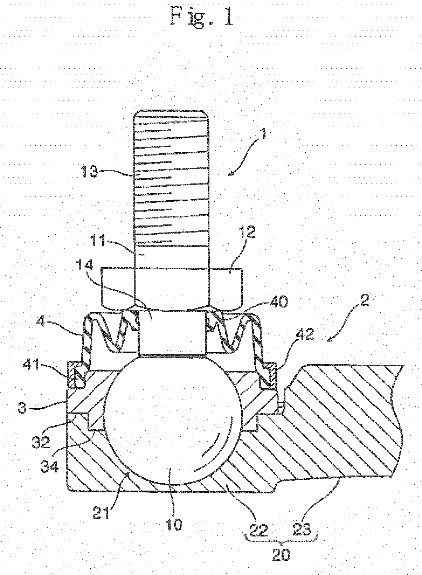

FIG. 1 is an illustration of a ball joint according to an exemplary embodiment, to which the present invention is applied. The ball joint includes a ball stud 1 and a holder 2. The ball stud 1 includes a shaft member 11 and a ball portion 10 formed at a distal end of the shaft member 11. The ball stud 1 is coupled to the holder 2 so as to freely rockable about the ball portion 10 as a center.

On the shaft member 11 of the ball stud 1, there is formed a flange portion 12 having a bearing surface to which a member to be mounted, e.g., a link is fixed. Meanwhile, male threads 13 are formed on a side opposite to the ball portion 10 with respect to the flange portion 12. Further, the flange portion 12 is formed into a shape of a hexagonal nut so that the male threads 13 of the ball stud 1 can be fastened, with a spanner wrench, to the member to be mounted, e.g., a link. Further, a cylindrical neck portion 14 is formed between the flange portion 12 and the ball portion 10, and the neck portion is a portion to which a small-diameter opening portion 40 of a dust cover 4 described later is to be mounted.

The ball portion 10 formed at the distal end of the shaft member 11 has a spherical shape with a diameter larger than a diameter of the shaft member 11. In this embodiment, in order to increase sphericity of the ball portion 10, the ball stud 1 is formed by joining a bearing steel ball to one end of the bar-shaped shaft member 11 by electric resistance welding. A method of manufacturing the ball stud 1 is not limited thereto. For example, the shaft member 11 and the ball portion 10 may be formed integrally with each other by cold forging.

The holder 2 includes a first member 20 and a second member 3 fixed to the first member 20. The first member 20 and the second member 3 are made of a thermoplastic synthetic resin, and are fixed to each other by ultrasonic welding. The second member 3 is fixed to the first member 20 so that a spherical space 21 configured to accommodate the ball portion 10 of the ball stud 1 is defined in the holder 2, thereby allowing the ball portion 10 to freely pivot in the spherical space 21.

Further, the first member 20 includes a ball receiving portion 22 formed into a substantially cylindrical shape, and a fixing portion 23 configured to couple the ball receiving portion 22 to a link. The ball receiving portion 22 and the fixing portion 23 are formed integrally with each other. Note that, in FIG. 1, an illustration of a part of the fixing portion 23 is omitted, but the fixing portion 23 may be formed into a variety of shapes in accordance with a link to which the fixing portion 23 is to be fixed. For example, female threads may be formed in the fixing portion 23 so that male threads formed in a distal end of a rod or the like constructing a link can be coupled to the female threads. Alternatively, the fixing portion 23 may be formed as a tie rod, and a ball joint may be further arranged at an opposite end portion of the tie rod.

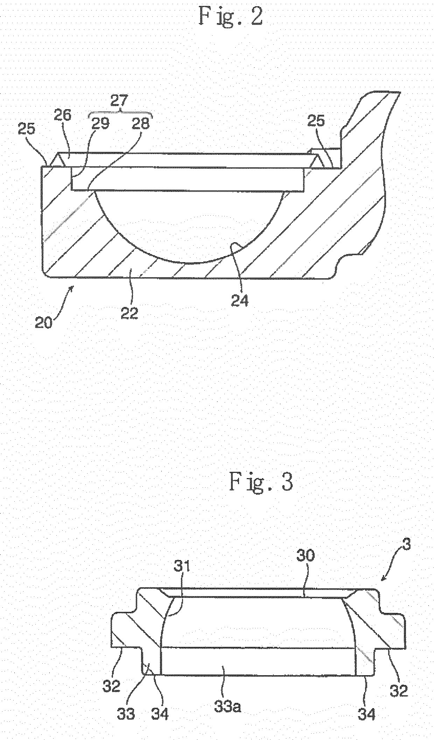

FIG. 2 is an enlarged view for illustrating details of the ball receiving portion 22 of the first member 20. The ball receiving portion 22 includes a first ball sliding contact surface 24 with a concave spherical shape approximate to a spherical surface of the ball portion 10 of the ball stud 1. The first ball sliding contact surface 24 is formed into a hemispherical shape, and a depth of the first ball sliding contact surface 24 is set to be slightly smaller than a radius of the ball portion 10. That is, when the ball portion 10 of the ball stud 1 is placed on the ball receiving portion 22 to be brought into contact with the first ball sliding contact surface 24, a maximum diameter portion of the ball portion 10 is exposed without being hidden by the first ball sliding contact surface 24.

An annular positioning groove 27 is formed along an opening rim of the first ball sliding contact surface 24 of the ball receiving portion 22 so as to surround the first ball sliding contact surface 24. The positioning groove 27 includes a fixation reference surface 28 configured to regulate a position of mounting the second member 3, and a sealing wall 29 surrounding the fixation reference surface 28.

Further, on a portion of the ball receiving portion 22 opposed to the second member 3, there is formed a joining surface 25 to be joined to the second member 3 by ultrasonic welding. In the first embodiment, the joining surface 25 is formed so as to correspond to the maximum diameter portion of the ball portion 10 of the ball stud 1. Further, the joining surface 25 is formed into an annular shape so as to surround the positioning groove 27, and is formed at a position adjacent to the positioning groove 27 on a radially outer side of the positioning groove 27. Further, between the joining surface 25 and the fixation reference surface 28 in the positioning groove 27, there is defined a step having a height equal to a height of the sealing wall 29. At a radial center of the joining surface 25, there is formed a rib 26 having a substantially triangular section is formed as an energy director for ultrasonic welding. The rib 26 is also formed into an annular shape so as to surround the first ball sliding contact surface 24 and the positioning groove 27. The rib 26 is molten during ultrasonic welding, and is pressed by the second member 3 to spread over the joining surface 25. Therefore, a width and a height of the rib 26 are determined in accordance with a width of the joining surface 25. For example, a plurality of ribs 26 each having a small sectional area may be formed on the joining surface 25.

Meanwhile, FIG. 3 is an illustration of the second member 3. Similarly to the first member, the second member 3 also includes a second ball sliding contact surface 31 with a concave spherical shape approximate to the spherical surface of the ball portion 10 of the ball stud 1. The second ball sliding contact surface 31 is combined with the first ball sliding contact surface 24 of the first member 20, thereby completing the spherical space 21 configured to accommodate the ball portion 10 of the ball stud 1. A spacing between the first ball sliding contact surface 24 and the second ball sliding contact surface 31, that is, an inner diameter of the spherical space 21 is set to be slightly larger than the diameter of the ball portion 10. Thus, the ball portion 10 accommodated in the spherical space 21 is freely pivotable in the holder 2 without being fastened by the first member 20 and the second member 3.

Further, an opening portion 30, through which the shaft member 11 of the ball stud 1 is to be inserted, is formed in a center of the second ball sliding contact surface 31. Thus, the second member is formed into a ring shape. The opening portion 30 is formed to have an inner diameter smaller than a maximum outer diameter of the ball portion 10 in order to prevent the ball portion 10 of the ball stud 1 from being disengaged from the holder 2. A rockable range of the ball stud 1 in the holder 2 is limited within the inner diameter of the opening portion 30.

In addition, the second member 3 includes a joining surface 32 opposed to the rib 26 formed on the first member 20, and a boss 33 protruding from the joining surface 32 toward the first member 20. The boss 33 is formed so as to surround an opening rim portion of the second ball sliding contact surface 31. When the second member 3 and the ball receiving portion 22 of the first member 20 are combined with each other, the boss 33 is fitted into the positioning groove 27 formed in the ball receiving portion 22. Further, a distal end surface of the boss 33 serves as a fixation reference surface 34. Accordingly, when the second member 3 and the first member 20 are subjected to ultrasonic welding, the fixation reference surface 34 of the second member 3 and the fixation reference surface 28 of the first member 20 are brought into abutment against each other so that the spacing between the first ball sliding contact surface 24 and the second ball sliding contact surface 31, that is, the inner diameter of the spherical space 21 defined in the holder 2 is maintained constant.

In order to enable the second ball sliding contact surface 31 to cover the spherical surface of the ball portion 10 of the ball stud 1, in other words, in order to enable the maximum diameter portion of the ball portion 10 to be inserted through an inside of the boss 33 and then accommodated in the second member 3, an inner peripheral surface of the boss 33 is formed into a cylindrical surface 33a that is continuous with the second ball sliding contact surface 31 and has a constant inner diameter. A boundary between the cylindrical surface 33a and the second ball sliding contact surface 31 corresponds to the maximum diameter portion of the ball portion 10. Accordingly, under a state in which the second member 3 and the first member 20 are joined to each other, a slight gap is defined between the inner peripheral surface of the boss 33 and the spherical surface of the ball portion 10 of the ball stud 1.

Further, a height of the boss 33 of the second member 3 is set so that a gap is defined between the joining surface 32 of the second member 3 and the joining surface 25 of the first member 20 under a state in which the fixation reference surface 34 of the second member 3 is held in abutment against the fixation reference surface 28 of the first member 20. When the rib 26 is molten by ultrasonic welding, the gap is filled with the molten resin, thereby fixing the first member 20 and the second member 3 to each other. Further, the boss 33 is brought into contact with the sealing wall 29 formed in the positioning groove 27 of the first member 20, to thereby prevent the rib 26 molten on the joining surface 25 by ultrasonic welding from protruding as a burr onto the first ball sliding contact surface 24 or the second ball sliding contact surface 31.

Still further, as illustrated in FIG. 1, the dust cover 4 is mounted between the second member 3 and the ball stud 1. The dust cover 4 includes the small-diameter opening portion 40 to be mounted to the neck portion 14 of the ball stud, and a large-diameter opening portion 41 to be mounted to the second member 3. The small-diameter opening portion 40 is mounted to the ball stud 1, and the large-diameter opening portion 41 is mounted to the second member 3. With this configuration, dust is prevented from adhering to the spherical surface of the ball portion 10 exposed from the opening portion 30 of the second member 3, and a lubricant pool is defined around the opening portion 30.

Further, a fixation ring 42 configured to prevent the dust cover 4 from slipping off is placed on the large-diameter opening portion 41 of the dust cover 4. The fixation ring 42 covers the large-diameter opening portion 41 from an outer side thereof, and sandwiches the large-diameter opening portion 41 together with the second member 3. The fixation ring 42 is made of a thermoplastic resin, and a part of the fixation ring 42 is fixed to the second member 3 by ultrasonic welding. In this manner, the fixation ring 42 prevents disengagement between the second member 3 and the large-diameter opening portion 41 while maintaining airtightness between the dust cover 4 and the second member 3. In addition, the small-diameter opening portion 40 of the dust cover 4 is pressed by an elastic force of the dust cover 4 itself onto a corner at which the neck portion 14 of the shaft member 11 and the flange portion 12 intersect with each other. Thus, airtightness between the dust cover 4 and the ball stud 1 is maintained.

Next, a method of manufacturing the ball joint according to this embodiment is described.

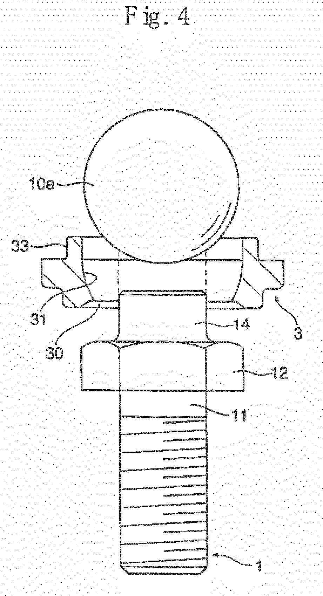

In a first step, as illustrated in FIG. 4, a bearing steel ball 10a is joined to the distal end surface of the shaft member 11 by electric resistance welding, and the ball stud 1 is manufactured. At this time, the inner diameter of the opening portion 30 of the second member 3 is smaller than a maximum diameter of the flange portion 12 formed on the shaft member 11 and smaller than a diameter of the bearing steel ball 10a. Accordingly, before the bearing steel ball is joined to the shaft member, the neck portion 14 of the shaft member 11 is inserted through the second member 3. In this manner, the ball stud 1 including the ball portion 10 formed on the distal end surface of the shaft member 11 is completed.

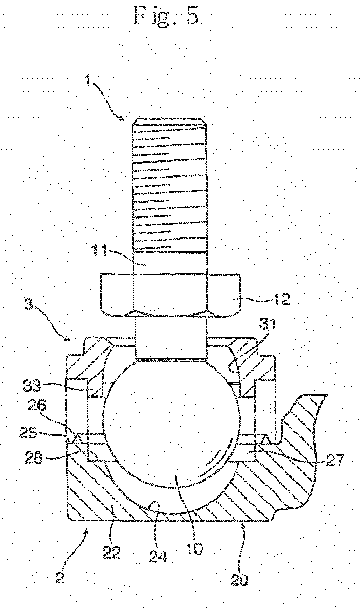

Next, as illustrated in FIG. 5, the ball portion 10 of the ball stud 1 is placed on the first ball sliding contact surface 24 of the ball receiving portion. In this state, the second member 3 is fixed to the first member 20 by ultrasonic welding. At this time, the boss 33 of the second member 3 is fitted into the positioning groove 27 formed in the ball receiving portion 22. The above-mentioned ultrasonic welding is performed by applying ultrasonic vibration and a pressurizing force to a region between the ball receiving portion 22 and the second member 3. At the start of the ultrasonic welding, the rib 26 formed on the joining surface 25 on the ball receiving portion 22 side is not molten sufficiently. Thus, the fixation reference surface 34 on the second member 3 side is not brought into abutment against the fixation reference surface 28 on the ball receiving portion 22 side. However, when the rib 26 is molten to spread over the joining surface 25, the fixation reference surface 34 on the second member 3 side is brought into abutment against the fixation reference surface 28 on the ball receiving portion 22 side. Thus, the second member 3 is fixed to the ball receiving portion 22 at a proper position.

Finally, the dust cover 4 is mounted between the ball stud 1 and the second member 3, and the fixation ring 42 embedded in the large-diameter opening portion 41 of the dust cover 4 is joined to the second member 3 by ultrasonic welding. In this manner, the ball joint according to the first embodiment is completed.

As described above, in the ball joint according to this embodiment, under a state in which the fixation reference surface 34 on the second member 3 side is held in abutment against the fixation reference surface 28 on the ball receiving portion 22 side, the spacing between the first ball sliding contact surface 24 of the ball receiving portion 22 and the second ball sliding contact surface 31 of the second member 3 is kept slightly larger than the diameter of the ball portion 10 of the ball stud 1. Accordingly, even when the second member 3 and the first member 20 are joined to each other by welding, the ball portion 10 is prevented from being fastened by the second member 3 and the ball receiving portion 22. Therefore, resistance during pivoting of the ball portion 10 held in the holder 2 is reduced, thereby being capable of rocking the ball stud 1 in the holder 2 with low torque.

Further, in the ball joint according to this embodiment, the annular fixation reference surface 28 is formed so as to surround the opening rim of the first ball sliding contact surface 24 of the ball receiving portion 22, and the annular joining surface 25 is formed on the outer side of the fixation reference surface 28. In addition, the step is defined between the fixation reference surface 28 and the joining surface 25. With this configuration, a molten resin on the joining surface 25 does not cover the fixation reference surface 28 and the first ball sliding contact surface 24. Accordingly, the first member 20 and the second member 3 can be properly joined to each other, and an adverse influence on rocking of the ball stud 1 can be eliminated.

In addition, under a state in which the second member 3 is welded to the first member 20, the slight gap is defined between the inner peripheral surface of the boss 33 of the second member 3 and the spherical surface of the ball portion 10. When the ball stud 1 is rocked in the holder 2, a lubricant in the dust cover 4 flows into the gap. Further, the gap is positioned in a vicinity of a region between the ball portion 10 and the holder 2 where bearing stress becomes highest just at a timing of application of a load in a radial direction (lateral direction in the drawing sheet of FIG. 1) to the ball stud 1. The position of the gap can be properly lubricated by the lubricant flowing into the gap.

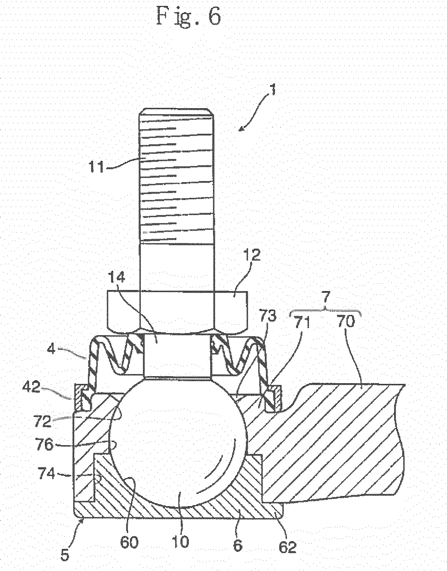

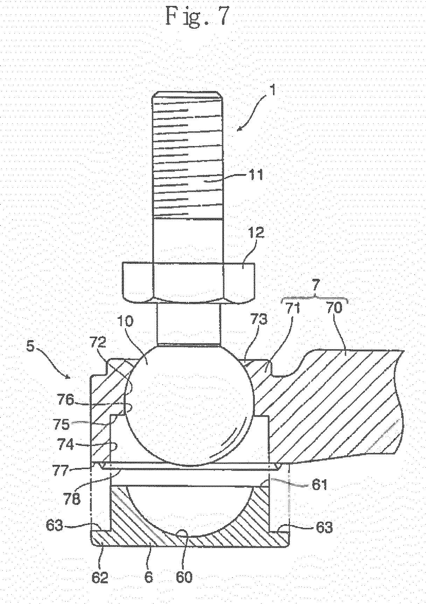

FIG. 6 and FIG. 7 are illustrations of a ball joint according to a second embodiment, to which the present invention is applied.

In the second embodiment, a holder 5 includes a first member 6 and a second member 7. The first member 6 and the second member 7 are joined to each other by ultrasonic welding, to thereby construct the holder 5. In this point, the above-mentioned first embodiment and the second embodiment are common to each other. However, the second embodiment is different from the first embodiment in that a fixing portion 70 configured to couple a link to the holder 5 is formed in the second member 7 rather than the first member 6. Note that, the ball stud 1 and the dust cover 4 are the same as those in the first embodiment. Accordingly, the same reference symbols as those in the first embodiment are given in FIG. 6 and FIG. 7, and detailed description thereof is omitted here.

The second member includes a ball receiving portion 71 formed into a substantially cylindrical shape, and the fixing portion 70 configured to couple the ball receiving portion 71 to a link. The ball receiving portion 71 and the fixing portion 70 are integrally molded from a thermoplastic synthetic resin. Note that, in FIG. 6 and FIG. 7, an illustration of a part of the fixing portion 70 is omitted. However, similarly to the above-mentioned first embodiment, the fixing portion 70 may be formed into an arbitrary shape.

The ball receiving portion 71 includes a second ball sliding contact surface 72 having a concave spherical shape approximate to the spherical surface of the ball portion 10 of the ball stud 1. Further, an opening portion 73, through which the shaft member 11 of the ball stud 1 is to be inserted, is formed in a center of the second ball sliding contact surface 72. The opening portion 73 is formed to have an inner diameter smaller than the maximum outer diameter of the ball portion 10 in order to prevent the ball portion 10 of the ball stud 1 from being disengaged from the holder 5. A rockable range of the ball stud 1 in the holder 5 is limited within the inner diameter of the opening portion 73.

FIG. 7 is an exploded view for illustrating a combined state of the first member 6 and the second member 7. A mounting hole 74, into which the first member 6 is to be fitted, is formed at a position in the ball receiving portion 71 opposite to the opening portion 73. A depth of the mounting hole 74 is set to be slightly smaller than the radius of the ball portion 10 of the ball stud 1, and an inner diameter of the mounting hole 74 is set to be slightly larger than an inner diameter of the second ball sliding contact surface 72. A fixation reference surface 75, against which the first member 6 is brought into abutment, is formed between the mounting hole 74 and the second ball sliding contact surface 72.

Further, a cylindrical surface 76 that is continuous with the second ball sliding contact surface 72 and has a constant inner diameter is formed at an end portion of the second ball sliding contact surface 72 on the mounting hole 74 side. The inner diameter of the cylindrical surface 76 is set to be substantially equal to an outer diameter of the ball portion 10. The ball portion 10 is received on the second ball sliding contact surface 72 of the ball receiving portion 71 through the cylindrical surface 76. Accordingly, similarly to the above-mentioned first embodiment, a slight gap is defined between the cylindrical surface 76 and the spherical surface of the ball portion 10 of the ball stud 1.

Further, on the ball receiving portion 71, a joining surface 77 configured to weld the first member 6 to the second member is formed into an annular shape so as to surround the mounting hole 74. On the joining surface 77, there is formed a rib 78 having substantially a triangular section as an energy director for ultrasonic welding. The rib 78 is molten during ultrasonic welding, and is pressed by the first member 6 to spread over the joining surface 77.

Meanwhile, the first member 6 is formed into a substantially cylindrical shape, and is fitted into the mounting hole 74 of the second member 7. The first member includes a first ball sliding contact surface 60 having a concave spherical shape approximate to the spherical surface of the ball portion 10 of the ball stud 1. The first ball sliding contact surface 60 is opposed to the second ball sliding contact surface 72 of the second member 7. The first ball sliding contact surface 60 is formed into a hemispherical shape, and a depth of the first ball sliding contact surface 60 is set to be slightly smaller than the radius of the ball portion 10. The first ball sliding contact surface 60 is combined with the second ball sliding contact surface 72 of the second member 7, thereby completing the spherical space configured to accommodate the ball portion 10 of the ball stud 1.

Further, a fixation reference surface 61 is formed at a distal end of the first member 6 that is to be inserted into the mounting hole 74. The fixation reference surface 61 is formed into an annular shape so as to surround the first ball sliding contact surface 60. The fixation reference surface 61 is brought into abutment against the fixation reference surface 75 of the second member 7, to thereby limit a distance by which the first member 6 is inserted into the mounting hole 74 of the second member 7. Thus, a spacing between the first ball sliding contact surface 60 and the second ball sliding contact surface 72, that is, an inner diameter of the spherical space is set to be slightly larger than the diameter of the ball portion 10. Thus, the ball portion 10 accommodated in the spherical space is freely pivotable in the holder 5 without being fastened by the first member 6 and the second member 7.

Still further, a flange portion 62 projects from an outer peripheral surface of the first member 6 formed into a substantially cylindrical shape, and surrounds the first member 6. The flange portion 62 includes a joining surface 63 that is to be opposed to the joining surface 77 formed in the second member 7. When the first member 6 and the second member 7 are subjected to ultrasonic welding, a molten resin spreads over a region between the joining surfaces 77 and 63.

Also in the second embodiment, a step is defined between the fixation reference surface 61 and the joining surface 63 of the first member 6. Even when the rib 78 of the second member 7 is molten to spread over the joining surfaces 77 and 63 during ultrasonic welding of the first member 6 and the second member 7, a burr formed of the molten resin does not protrude onto the fixation reference surface 61. That is, the inner peripheral surface of the mounting hole 74 serves as a sealing wall against the molten resin.

A method of manufacturing the ball joint according to the second embodiment is the same as the above-mentioned method of manufacturing the ball joint according to the first embodiment. First, before a bearing steel ball for constructing the ball portion 10 of the ball stud 1 is joined to the shaft member 11, the neck portion 14 of the shaft member 11 is inserted through the second member 7. In this state, the bearing steel ball 10a is joined to the distal end surface of the shaft member by electric resistance welding, thereby manufacturing the ball stud 1.

After that, the ball portion 10 of the ball stud 1 is placed on the second ball sliding contact surface 72 of the ball receiving portion 71. In this state, the first member 6 is fitted into the mounting hole 74 of the second member 7, and the first member 6 is fixed to the second member 7 by ultrasonic welding. Finally, the dust cover 4 is mounted between the ball stud 1 and the second member 7. Then, the fixation ring 42 is placed on the large-diameter opening portion 41 of the dust cover 4, and the fixation ring 42 is joined to the second member 7 by ultrasonic welding. In this manner, the ball joint according to the second embodiment is completed.

## Claims

1. A ball joint, comprising:
a ball stud (1) comprising:
a shaft member (11); and
a ball portion (10) formed at one end of the shaft member (11); and
a holder (2) made of a synthetic resin and configured to accommodate the ball portion (10) in a pivotable manner,
wherein the holder (2) comprises:
an opening portion (30) from which the shaft member (11) protrudes;
a first member (20) made of thermoplastic synthetic resin comprising a first ball sliding contact surface (24) having a concave spherical shape approximate to a spherical surface of the ball portion (10); and
a second member (3) made of thermoplastic synthetic resin comprising:
a second ball sliding contact surface (31) having a concave spherical shape approximate to the spherical surface of the ball portion (10); and
the opening portion (30) formed in a center of the second ball sliding contact surface (31),
**characterised in that**
the first member (20) and the second member (3) respectively comprise joining surfaces (25, 32) fixed to each other by welding, and respectively comprise fixation reference surfaces (28, 34) that are brought into abutment against each other so that a spacing between the first ball sliding contact surface (24) and the second ball sliding contact surface (31) is maintained constant,
wherein the fixation reference surfaces (28, 34) are each formed into an annular shape so as to surround the ball portion (10) of the ball stud (1),
wherein the joining surfaces (25, 32) are formed into an annular shape on an outer side of the fixation reference surfaces (28, 34), respectively, and
wherein a step is defined between the fixation reference surfaces (28, 34) and the joining surfaces (25, 32) wherein a gap is defined between the joining surface (32) of the second member (3) and the joining surface (25) of the first member (20) under a state in which the fixation reference surface (34) of the second member (3) is held in abutment against the fixation reference surface (28) of the first member (20),
wherein the joining surface (25) of the first member (20) and the joining surface (32) of the second member (3) are fixed to each other via the molten resin, when the first member(20) and the second member (3) are fixed by welding.

2. A ball joint according to claim 1,
wherein each of the fixation reference surfaces (28, 34) is arranged at a position shifted from a maximum diameter portion of the ball portion (10) to the first member (20) side, and
wherein the second member (3) comprises a cylindrical surface (33a) that is continuous with the second ball sliding contact surface (31) and allows the maximum diameter portion of the ball portion (10) to be inserted therethrough.

3. A ball joint according to claim 1 or 2, further comprising: a dust cover (4) comprising:
a small-diameter opening portion (40) to be mounted to the shaft member (11) of the ball stud (1); and
a large-diameter opening portion (41) to be mounted to the second member (3); and
a fixation ring (42) made of a synthetic resin, the fixation ring (42) being mounted to the large-diameter opening portion (41) and welded to the second member (3).

4. A ball joint according to claim 1, further comprising:
a rib (26) that melts during welding of the first member (20) and the second member (3) and which is formed on the joining surface (25) of the first member (20) or the joining surface (32) of the second member (3).

## Patentansprüche

1. Ein Kugelgelenk, umfassend:
einen Kugelzapfen (1), umfassend:
ein Schaftelement (11); und
einen Kugelabschnitt (10), der an einem Ende des Schaftelements (11) ausgebildet ist; und
einen Halter (2) aus Kunstharz, der zur schwenkbaren Aufnahme des Kugelabschnitts (10) ausgebildet ist,
wobei der Halter (2) umfasst:
einen Öffnungsabschnitt (30), aus dem das Schaftelement (11) vorsteht;
ein erstes Element (20), das aus thermoplastischem Kunstharz hergestellt ist und eine erste Kugelgleitkontaktfläche (24) mit einer konkaven, kugelförmigen Form aufweist, die einer kugelförmigen Oberfläche des Kugelabschnitts (10) angenähert ist; und
ein zweites Element (3) aus thermoplastischem Kunstharz, umfassend:
eine zweite Kugelgleitkontaktfläche (31) mit einer konkaven, kugelförmigen Form, die der Kugelfläche des Kugelabschnitts (10) angenähert ist; und
der Öffnungsabschnitt (30), in einer Mitte der zweiten Kugelgleitkontaktfläche (31) ausgebildet ist,
**dadurch gekennzeichnet, dass**
das erste Element (20) und das zweite Element (3) jeweils Verbindungsflächen (25, 32) aufweisen, die durch Schweißen aneinander befestigt sind, und jeweils Befestigungsbezugsflächen (28, 34) aufweisen, die in Anlage gegeneinander gebracht werden, so dass ein Abstand zwischen der ersten Kugelgleitkontaktfläche (24) und der zweiten Kugelgleitkontaktfläche (31) konstant gehalten wird,
wobei die Befestigungsbezugsflächen (28, 34) jeweils ringförmig ausgebildet sind, so dass sie den Kugelabschnitt (10) des Kugelzapfens (1) umgeben,
wobei die Verbindungsflächen (25, 32) jeweils an einer Außenseite der Befestigungsbezugsflächen (28, 34) ringförmig ausgebildet sind, und
wobei eine Stufe zwischen den Befestigungsbezugsflächen (28, 34) und den Verbindungsflächen (25, 32) definiert ist, wobei ein Spalt zwischen der Verbindungsfläche (32) des zweiten Elements (3) und der Verbindungsfläche (25) des ersten Elements (20) in einem Zustand definiert ist, in dem die Befestigungsbezugsflächen (34) des zweiten Elements (3) in Anlage an der Befestigungsbezugsflächen (28) des ersten Elements (20) gehalten wird,
wobei die Verbindungsfläche (25) des ersten Elements (20) und die Verbindungsfläche (32) des zweiten Elements (3) über das geschmolzene Harz aneinander befestigt sind, wenn das erste Element (20) und das zweite Element (3) durch Schweißen befestigt werden.

2. Ein Kugelgelenk nach Anspruch 1,
wobei jede der Befestigungsbezugsflächen (28, 34) an einer Position angeordnet ist, die von einem Abschnitt mit maximalem Durchmesser des Kugelabschnitts (10) zur Seite des ersten Elements (20) verschoben ist, und
wobei das zweite Element (3) eine zylindrische Oberfläche (33a) aufweist, die mit der zweiten Kugelgleitkontaktfläche (31) kontinuierlich ist und es ermöglicht, dass der Abschnitt mit dem maximalen Durchmesser des Kugelabschnitts (10) durch sie hindurch eingeführt werden kann.

3. Kugelgelenk nach Anspruch 1 oder 2, ferner umfassend: eine Staubschutzhülle (4), umfassend:
einen Öffnungsabschnitt (40) mit kleinem Durchmesser, der an dem Schaftelement (11) des Kugelzapfens (1) montiert werden kann; und
einem Öffnungsabschnitt (41) mit großem Durchmesser, der an dem zweiten Element (3) montiert werden kann; und
einen Fixierring (42) aus Kunstharz, wobei der Fixierring (42) an dem Öffnungsabschnitt (41) mit großem Durchmesser montiert und mit dem zweiten Element (3) verschweißt ist.

4. Ein Kugelgelenk nach Anspruch 1, das ferner umfasst:
eine Rippe (26), die während des Schweißens des ersten Elements (20) und des zweiten Elements (3) schmilzt, und die auf der Verbindungsfläche (25) des ersten Elements (20) oder der Verbindungsfläche (32) des zweiten Elements (3) ausgebildet ist.

## Revendications

1. Joint à rotule comprenant :
un pivot à rotule (1) comprenant :
un élément d'axe (11), et
un organe à rotule (10) formé à une extrémité de l'élément d'axe (11), et
un support (2) constitué d'une résine synthétique et configuré pour accueillir l'organe à rotule (10) de sorte à ce qu'il puisse pivoter,
dans lequel le support (2) comprend :
une partie ouvrante (30) à partir de laquelle l'élément d'axe (11) fait saillie,
un premier élément (20) constitué d'une résine synthétique thermoplastique comprenant une première surface de contact glissant de rotule (24) présentant une forme sphérique concave approchant la surface sphérique de l'organe à rotule (10), et
un second élément (3) constitué d'une résine synthétique thermoplastique comprenant :
une seconde surface de contact glissant de rotule (31) présentant une forme sphérique concave approchant la surface sphérique de l'organe à rotule (10), et
la partie ouvrante (30) formée au centre de la seconde surface de contact glissant de rotule (31),
**caractérisé en ce que**
le premier élément (20) et le second élément (3) comprennent respectivement des surfaces de raccordement (25, 32) fixées l'une à l'autre par soudage, et qui comprennent respectivement des surfaces de référence de fixation (28, 34) qui sont amenées en butée l'une contre l'autre de sorte à ce que l'espacement entre la première surface de contact glissant de rotule (24) et la seconde surface de contact glissant de rotule (31) soient maintenu constant,
dans lequel les surfaces de référence de fixation (28, 34) présentent chacune une forme annulaire de sorte à entourer l'organe à rotule (10) du pivot à rotule (1),
dans lequel les surfaces de raccordement (25, 32) présentent respectivement une forme annulaire sur le côté externe des surfaces de référence de fixation (28, 34), et
dans lequel un échelon est défini entre les surfaces de référence de fixation (28, 34) et les surfaces de raccordement (25, 32), un intervalle étant défini entre la surface de raccordement (32) du second élément (3) et la surface de raccordement (25) du premier élément (20) de sorte à ce que la surface de référence de fixation (34) du second élément (3) soit maintenue en butée contre la surface de référence de fixation du premier élément (20),
dans lequel la surface de raccordement (25) du premier élément (20) et la surface de raccordement (32) du second élément (3) sont fixées l'une à l'autre par l'intermédiaire de la résine qui est fondue lorsque le premier élément (20) et le second élément (3) sont fixés par soudage.

2. Joint à rotule selon la revendication 1,
dans lequel chacune des surfaces de référence de fixation (28, 34) est agencée à une position décalée de la partie de diamètre maximal de l'organe à rotule (10) vers le côté du premier élément (20), et
dans lequel le second élément (3) comprend une surface cylindrique (33a) qui est continue avec la seconde surface de contact glissant de rotule (31) et autorise l'insertion de la partie de diamètre maximal de l'organe à rotule (10) en son travers.

3. Joint à rotule selon la revendication 1 ou la revendication 2, comprenant en outre :
une protection anti-poussière (4) comprenant :
une partie ouvrante de petit diamètre (40) à monter sur l'élément d'axe (11) du pivot à rotule (1), et
une partie ouvrante de grand diamètre (41) à monter sur le second élément (3), et
une bague de fixation (42) constituée d'une résine synthétique, la bague de fixation (42) étant montée sur la partie ouvrante de grand diamètre (41) et soudée sur le second élément (3).

4. Joint à rotule selon la revendication 1, comprenant en outre :
une nervure (26) qui fond pendant le soudage du premier élément (20) et du second élément (3) et qui est formée sur la surface de raccordement (25) du premier élément (20) ou sur la surface de raccordement (32) du second élément (3).
